# EUROPEAN PATENT APPLICATION

(11) **EP 3 671 684 A1**
(43) Date of publication of application: **24.06.2020**
(21) Application number: 19216340.0
(22) Date of filing: 13.12.2019
(51) Int. Cl.: G08B 29/04, G08B 13/196

(54) **SYSTEMS AND METHODS FOR DETECTING A SYSTEM MALFUNCTION IN A SURVEILLANCE SYSTEM**

(30) Priority: 17.12.2018 US 201816222674
(71) Applicant: Honeywell International Inc., Morris Plains, NJ 07950 (US)
(72) Inventor: RAJAMANICKAM, Dinesh Babu, Morris Plains, NJ New Jersey 07950 (US); MADHUSUTHANAN, Sunil, Morris Plains, NJ New Jersey 07950 (US)
(74) Representative: Haseltine Lake Kempner LLP

(57) **Abstract**

Systems and methods for detecting a system malfunction in a surveillance system are provided. Such systems and methods can include a camera that can detect alarm conditions in a secured area and transmit alarm notifications indicative of the alarm conditions, a server device that can receive the alarm notifications from the camera, and a processer of the server device that can compare a current number of the alarm notifications received by the server device during a first time period to a historical number of the alarm notifications received by the server device during a second time period. When the current number differs from the historical number by at least a preconfigured threshold value, the processor can initiate a display of a possible malfunction alarm.

## Description

### FIELD

The present invention relates generally to surveillance systems. More particularly, the present invention relates to systems and methods for detecting a system malfunction in a surveillance system.

### BACKGROUND

Known systems and methods for detecting a malfunction in a surveillance system monitor a connection or a power on state of a camera to determine whether the camera is malfunctioning. However, in some cases, the camera can be powered on and streaming video via a network while simultaneously failing to produce alarms. For example, in some instances, the camera and accompanying software can be running continuously and can enter a hang-up or non-responsive state that prevents the alarms from being transmitted and prevents detection of motion or other alarm conditions. Accordingly, known systems and methods require checking the camera individually to verify whether the camera is accurately reporting the alarms. Unfortunately, when the surveillance system include a large number of cameras, such requirements can be cost prohibitive and time consuming.

In view of the above, there is a continuing, ongoing need for improved systems and methods.

### BRIEF DESCRIPTION OF THE DRAWINGS

FIG. 1 is a block diagram of a system in accordance with disclosed embodiments; and
FIG. 2 is a flow diagram of a method in accordance with disclosed embodiments.

### DETAILED DESCRIPTION

While this invention is susceptible of an embodiment in many different forms, there are shown in the drawings and will be described herein in detail specific embodiments thereof with the understanding that the present disclosure is to be considered as an exemplification of the principles of the invention. It is not intended to limit the invention to the specific illustrated embodiments.

Embodiments disclosed herein may include systems and methods for detecting a system malfunction in a surveillance system monitoring a secured area. Such systems and methods can include a camera, a server device, and a processor of the server device such that the camera can detect alarm conditions in the secured area and transmit alarm notifications indicative of the alarm conditions to the server device. In some embodiments, the server device can be remote from the secured area and can receive the alarm notifications from the camera via a wide area network, such as the internet. Responsive to receiving the alarm notifications, the processer of the server device can compare a current number of the alarm notifications received by the server device during a first time period to a historical number of the alarm notifications received by the server device during a second period of time and, when the current number differs from the historical numbers by at least a preconfigured threshold value, can initiate a display or a notification indicative of a possible malfunction alarm.

In some embodiments, the processer of the server device can compare the current number to a plurality of historical numbers of the alarm notifications received by the server device during a plurality of second time periods, and when the current number differs from one or more of the plurality of historical numbers by at least the preconfigured threshold value, the processor of the server device can initiate the display or the notification indicative of the possible malfunction alarm.

In some embodiments, the second time period and each of the plurality of second time periods can be analogous to the first time period. Additionally or alternatively, in some embodiments, the historical number can include an average of a plurality of data sets such that each of the plurality of data sets is received by the server device during a respective time period that is analogous to the first time period.

In some embodiments, the first time period and the second time period can include a preconfigured length of time measured by the processor of the server device. For example, the preconfigured length of time can include, but is not limited to a time period of a specific day of the week, multiple days of the week, a week, or a month. Accordingly, the camera can transmit the alarm notifications to the server device for the alarm conditions occurring during the preconfigured length of time, and the processor of the server device can count a number of alarms occurring during the preconfigured length of time.

For example, the processor of the server device can determine that the camera generated 25 motion alarms (the current number) from 6pm to 7pm on a current day and can compare the 25 motion alarms to the historical number of the alarm notifications received during an analogous time, that is, from 6pm to 7pm, on previous days to determine whether the current number differs from the historical number by at least the preconfigured threshold value, for example, 50%. In some embodiments, the processor of the server device can retrieve the historical number or data indicative thereof from a memory device of the server device.

In some embodiments, the processor of the server device can initiate the display or the notification indicative of the possible malfunction alarm on a user interface of the server device. For example, the user interface can alter a camera status icon for the camera displayed thereon, such as by changing the camera status icon to a different icon to visually notify a user about the possible malfunction alarm.

In some embodiments, when the current number differs from the historical number by at least the preconfigured threshold value, the processor of the server device can initiate one or more actions to address, correct, or test a functionality of the camera. For example, the one or more actions can include, but are not limited to one or a combination of transmitting a walk test request to the user in the secured area, rebooting the camera, disabling and enabling server side analytics for the camera, restarting the server device, or transmitting the possible malfunction alarm to an administrator of the secured area.

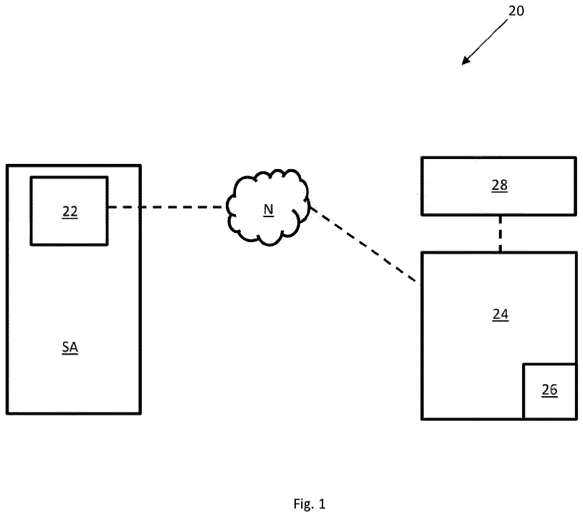

FIG. 1 is a block diagram of a system 20 in accordance with disclosed embodiments. The system 20 can include a camera 22, a server device 24, a processor 26, and a user interface 28. As seen in FIG. 1, the camera 22 can monitor a secured area SA and can communicate with the server device 24 via a network N using wired or wireless communication mediums known in the art.

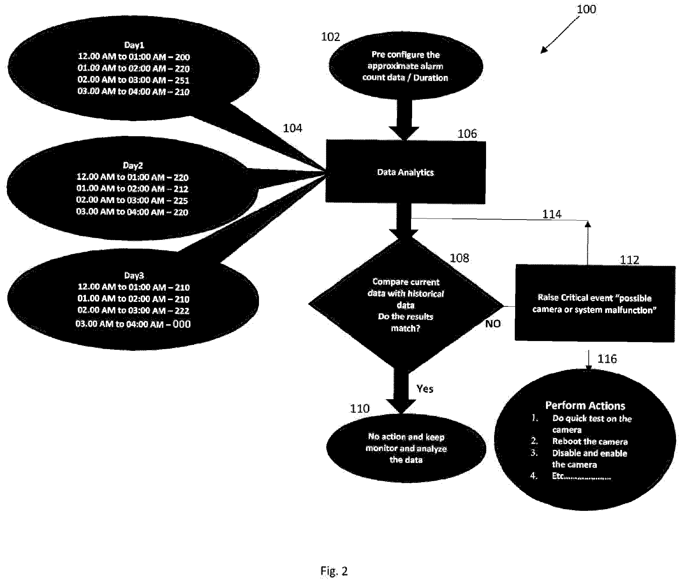

FIG. 2 is a flow diagram of method 100 in accordance with disclosed embodiments. As seen in FIG. 2, the method 100 can include the server device 24 receiving or identifying a preconfigured length of time for counting alarm notifications, as in 102, and receiving the alarm notifications from the camera 22, as in 104. Then, the method 100 can include the processor 26 applying data analytics to the alarm notifications and other data received from the camera 22 indicative of detected motion or other events within the secured area SA, as in 106.

Responsive to receiving the alarm notifications or the other data, the method 100 can include the processor 26 comparing a current number of the alarm notifications received by the server device during a first time period (the preconfigured length of time received or identified, as in 102) to a historical number of the alarm notifications, as in 108. When the current number matches the historical number within a predefined range, the method 100 can include the processor 26 taking no action and continuing to analyze the alarm notifications and the other data received from the camera 22, as in 110. However, when the current number fails to match the historical number within the predefined range, the method 100 can include the processor 26 raising or initiating a critical event alarm indicative of a possible camera or system malfunction, as in 112, for example, by displaying the critical event alarm on the user interface 28, and continuing to compare the current number to the historical number, as in 114.

In some embodiments, when the current number fails to match the historical number within the predefined range, the method 100 can include the processor 26 initiating or performing actions in an to attempt to address, correct and/or test a problem with the camera that is causing the possible camera or system malfunction, as in 116.

It is to be understood that each of the camera 22, the server device 24, the processor 26, and the user interface 28 disclosed herein can include a respective transceiver device and a respective memory device, each of which can be in communication with respective control circuitry, one or more respective programmable processors, and respective executable control software as would be understood by one of ordinary skill in the art. In some embodiments, the respective executable control software of each of the camera 22, the server device 24, the processor 26, and the user interface 28 can be stored on a respective transitory or non-transitory computer readable medium, including, but not limited to local computer memory, RAM, optical storage media, magnetic storage media, flash memory, and the like, and some or all of the respective control circuitry, the respective programmable processors, and the respective executable control software of each of the camera 22, the server device 24, the processor 26, and the user interface 28 can execute and control at least some of the methods described herein.

Although a few embodiments have been described in detail above, other modifications are possible. For example, the steps described above do not require the particular order described or sequential order to achieve desirable results. Other steps may be provided, steps may be eliminated from the described flows, and other components may be added to or removed from the described systems. Other embodiments may be within the scope of the invention.

From the foregoing, it will be observed that numerous variations and modifications may be effected without departing from the spirit and scope of the invention. It is to be understood that no limitation with respect to the specific system or method described herein is intended or should be inferred. It is, of course, intended to cover all such modifications as fall within the spirit and scope of the invention.

## Claims

1. A system comprising:
a camera that detects alarm conditions in a secured area and transmits alarm notifications indicative of the alarm conditions;
a server device that receives the alarm notifications from the camera; and
a processer of the server device that compares a current number of the alarm notifications received by the server device during a first time period to an historical number of the alarm notifications received by the server device during a second period of time,
wherein, when the current number differs from the historical number by at least a preconfigured threshold value, the processor initiates a display of a possible malfunction alarm.

2. The system of claim 1 wherein the second time period is analogous to the first time period.

3. The system of claim 1 wherein the historical number includes an average of a plurality of data sets, and wherein the server devices receives each of the plurality of data sets during a respective time period that is analogous to the first time period.

4. The system of claim 1 wherein the processor retrieves the historical number or data indicative of the historical number from a memory device of the server device.

5. The system of claim 1 wherein the processor initiates the display of the possible malfunction alarm on a user interface of the server device.

6. The system of claim 5 wherein the user interface alters a camera status icon for the camera displayed thereon.

7. The system of claim 1 wherein the first time period includes a preconfigured length of time measured by the processor.

8. The system of claim 1 wherein the server device is remote from the secured area and receives the alarm notifications via a wide area network.

9. The system of claim 1 wherein, when the current number differs from the historical number by at least the preconfigured threshold value, the processor initiates an action to address, correct, or test a functionality of the camera, and wherein the action includes one or more of transmitting a walk test request to a user in the secured area, rebooting the camera, disabling and enabling server side analytics for the camera, restarting the server device, or transmitting the possible malfunction alarm to an administrator of the secured area.

10. A method comprising:
a server device receiving alarm notifications indicative of alarm conditions detected by a camera;
a processer of the server device comparing a current number of the alarm notifications received by the server device during a first time period to a historical number of the alarm notifications received by the server device during a second time period; and
when the current number differs from the historical number by at least a preconfigured threshold value, the processor initiating a display of a possible malfunction alarm.

11. The method of claim 10 wherein the second time period is analogous to the first time period.

12. The method of claim 10 wherein the historical number includes an average of a plurality of data sets, and wherein each of the plurality of data sets is received by the server device during a respective time period that is analogous to the first time period.

13. The method of claim 10 further comprising the processor initiating the display of the possible malfunction alarm on a user interface of the server device.

14. The method of claim 10 wherein the server device is remote from the secured area and receives the alarm notifications via a wide area network.

15. The method of claim 10 further comprising:
when the current number differs from the historical number by at least the preconfigured threshold value, the processor initiating an action to address, correct, or test a functionality of the camera,
wherein the action includes one or more of transmitting a walk test request to a user in an area monitored by the camera, rebooting the camera, disabling and enabling server side analytics for the camera, restarting the server device, and transmitting the possible malfunction alarm to an administrator of the camera.
